# EUROPEAN PATENT SPECIFICATION

(11) **EP 1 084 621 B1**
(45) Date of publication and mention of the grant of the patent: **09.02.2005**
(21) Application number: 00119859.7
(22) Date of filing: 12.09.2000
(51) Int. Cl.: A23B 4/023, A23L 1/314, A23L 1/318, A23B 4/027, A23B 4/22

(54) **Salting agent for food processing**
Salzlösung für Lebensmittelverarbeitung
Une solution saline pour le traitement alimentaire

(30) Priority: 17.09.1999 JP 26347999
(43) Date of publication of application: 21.03.2001
(73) Proprietor: Ajinomoto Co., Inc., Tokyo (JP)
(72) Inventor: Susa, Yasuyuki, Food Research & Development Labs., Kawasaki-ku, Kawasaki-shi, Kanagawa-ken (JP); Nakagoshi, Hiroyuki, Food Research & Development, Kawasaki-ku, Kawasaki-shi, Kanagawa-ken (JP); Sakaguchi, Shoji, Food Research & Development, Kawasaki-ku, Kawasaki-shi, Kanagawa-ken (JP)
(74) Representative: Strehl Schübel-Hopf & Partner

(56) References cited:
- EP-A- 0 898 895
- EP-A- 0 963 704
- WO-A-94/21129
- DE-A- 19 840 744
- US-A- 5 948 662
- GUO-JANETSAI ET AL: "Transglutaminase from Streptoverticillium ladakanum and application to minced fish products" JOURNAL OF FOOD SCIENCE,US,INSTITUTE OF FOOD TECHNOLOGISTS. CHICAGO, vol. 61, no. 6, 1996, pages 1234-1238, XP002131675 ISSN: 0022-1147
- KUMAZAWA Y.: "suppression of surimi gel setting by transglutaminase inhibitors" JOURNAL OF FOOD SCIENCE, vol. 60, no. 4, 1995, pages 715-726, XP000982634
- NIO N.: "gelation of casein and soybean globulins by transglutaminase" AGRICULTURAL AND BIOLOGICAL CHEMISTRY, vol. 49, no. 8, 1985, page 2283-2286 XP000982631
- PATENT ABSTRACTS OF JAPAN vol. 1998, no. 03, 27 February 1998 (1998-02-27) & JP 09 299065 A (AJINOMOTO CO INC), 25 November 1997 (1997-11-25)
- PATENT ABSTRACTS OF JAPAN vol. 1995, no. 04, 31 May 1995 (1995-05-31) & JP 07 008225 A (AJINOMOTO CO INC), 13 January 1995 (1995-01-13)
- NOWSAD A.: "effects of amine salts on the elasticity of suwari gel from alaska pollack" BULLETIN OF THE JAPANESE SOCIETY OF SCIENTIFIC FISHERIES, vol. 59, no. 6, 1993, pages 1017-1021, XP000989640
- JIANRONG WAN: "inhibitory factors of transglutaminase in salted salmon meat" FISHERIES SCIENCE, vol. 61, no. 6, 1995, pages 968-972, XP000989631

## Description

### BACKGROUND OF THE INVENTION

### FIELD OF THE INVENTION

The present invention relates to a pickle solution and it's use in processed meat products such as ham, bacon and roast pork and a processed meat product obtainable with the pickle solution. More specifically, according to the present invention, the viscosity of protein-containing pickle is not increased when a transglutaminase is added, and thus the problem in its use due to the increase of the viscosity of the pickle is solved Therefore, the quality of processed meat products such as ham, bacon and roast pork which are produced by being cured in the pickle or injecting the pickle is improved.

### DESCRIPTION OF THE RELATED ART

A curing step for permeating and dispersing a salting agent in solution into raw meat materials is usually required for manufacturing processed meat products such as ham and bacon. The methods include a dry-curing method, a curing-in-pickle method, a pickle-injection method. Recently, the curing step is mostly effected by the curing-in-pickle method and the pickle-injection method.

The pickle to be used in the step, which is a solution of a salting agent, mainly comprises sodium chloride and color-fixing agents; for the purpose of improving the yield, water holding capacity, binding capacity and color-fixing ability and the like, polyphosphate salts and ascorbic acids are additionally blended therein, together with seasonings, preservatives and color-fixing agents.

And for the purpose of improving products in terms of water retentivity, emulsification ability, food taste and texture such as firmness and elasticity or bindability, pickle types blended with various protein materials including egg white, whey protein, caseins such as sodium caseinate or soy bean protein, are now mainly used.

In addition, for the purpose of further improving food taste and texture and increasing slice yield (sliceability), recently a transglutaminase (abbreviated as TGase hereinafter) is sometimes blended thereto as described for example in EP 0 028 113 A2. TGase not only reacts with proteins of raw material meat but also reacts with the protein materials in the pickle permeated or injected into the.meat, thereby remarkably improving the physical properties of the resulting final product. Because the effect of TGase is exerted more in pickle containing more protein materials, the use of TGase has been desired strongly for pickle having a higher content of protein materials. However, in case that TGase is used in pickle at a higher content of protein materials, there is a problem that the viscosity of the resulting pickle is increased.

Generally, a pickle is left to stand in a low-temperature stock chamber for one night or about 2 to 4 days after preparation, so as to completely dissolve powdery materials including protein materials or to remove bubbles and foam from the pickle. Then the pickle is used. TGase is also supplied generally in the form of powder and therefore should be dissolved along with the protein materials. However, the protein materials in the pickle, particularly soy bean protein and sodium caseinate and the like, are crosslinked and polymerized by TGase during the subsequent resting period, so that the viscosity of the resulting pickle is notably increased disadvantageously, making it impossible to conduct injection. Accordingly, in case that TGase is added to pickle, some treatment has been required so as to avoid the increase of the viscosity of the pickle during resting.

Japanese Patent Application Laid-open Nos. 255426/1995 and 56303/1999 report techniques for suppressing the increase of pickle viscosity caused by TGase. The techniques comprise controlling the quantities of caseins' and soy bean protein highly reactive with TGase among protein materials blended in pickle, or comprise using partial hydrolysates prepared from them. These techniques suppress the viscosity increase with no influence on TGase activity, by reducing the amount of raw materials functioning as substrates of TGase (i.e., protein materials) or by substituting such raw materials with materials causing less change of the physical properties. However, when the quantity of the protein in pickle is controlled, functions demanded for the protein, such as imparting physical properties and water-holding capacity to the processed meat products, get so insufficient that disadvantages such as poor elasticity and noticeable water release from the resulting product may occur. In case that protein partial hydrolysates are used, the increase of the viscosity can be suppressed within one day, but can never sufficiently be suppressed under storage for a longer term. It is needless to say that, because caseins and soy bean protein are used only in the form of their partial hydrolysates, the creation of diverse food taste and texture or quality based on devising various blends of protein materials is restricted. Hence, the use of TGase in pickle is still limited in such a manner that TGase is used in pickle with less amount of protein materials blended or in pickle to be consumed up within one day or to be disposed when unused.

Journal of Food Science, Vol. 61, No. 6, 196, pp. 1234-1238 relates to the application of transglutaminase to hacked fish products ("surimi").

Journal of Food Science, Vol. 60, No. 4, 1297, pp. 715-717, 726 discloses the treatment of hacked fish with transglutaminase and ammonium salt. The concentration of ammonium salt is given as 0.1 mol or higher in relation to the hacked fish.

Agric. Biol. Chem. (49), 2283-2286, 1985; EP-A-0 898 895; Fisheries Science 61(6), 968-972 (1995) and JP-A-07 008 225 (Patent Abstracts of Japan) relate to transglutaminases and their use in the modification of food. The combination of ammonium salts with transglutaminase is not mentioned in these documents.

The document Nippon Suisan Gakkaishi, 59(6), 1017-1021 (1993) discloses the treatment of hacked fish which contains transglutaminase with ammonium salts.

US 5,948,662 discloses a composition comprising transglutaminase and an ammonium salt and its application to the industrial production of various foods.

### SUMMARY OF THE INVENTION

On such background of the conventional techniques as described above, it is an object of the present invention to provide a pickle solution comprising a salting agent without any of the disadvantages described above even after the salting agent is blended with TGase and with no need of any modification or treatment of raw protein materials of the pickle, and to provide a pickle using the same.

The present inventors have made investigations so as to solve the problems as stated above, and have found a method for exerting the conventional effect of TGase, comprising adding a substance suppressing the reaction by TGase, namely an ammonium salt in an amount above 0.001 mol/liter to below 0.1 mol/liter, to a pickle containing TGase, thereby regulating the activity of TGase to suppress the increase of the viscosity of the pickle, and still recovering the activity of TGase in the final product. Thus, the present invention has been achieved. In accordance with the present invention, in other words, TGase can be added to pickles having compositions that conventionally would never allow the addition of TGase thereto because of the increase of the viscosity, with no modification of the compositions. The invention is essentially different from the conventional techniques, in respect of controlling the TGase activity.

More specifically, the present invention relates to a pickle solution, comprising a protein for use in pickle, a transglutaminase, an ammonium salt in an amount above 0.001 mol/liter to below 0.1 mol/liter, and water; the use of said pickle solution for meat processing; and a processed meat product, obtainable by treating a meat product with said pickle solution.

### DETAILED DESCRIPTION OF THE INVENTION

The invention is now described specifically hereinbelow.

TGases are classified into calcium-independent and calcium-dependent types. Either can be used in the present invention. Examples of the former include those derived from microorganisms such as Actinomycetes and Bacillus subtilis (see, for example, JP-A-64-27471). Example of the latter include those derived from guinea pig liver (see, for example, JP-B-1-50382), those derived from microorganisms such as Oomycetes, those derived from animals such as bovine blood, swine blood , those derived from fishes such as salmon, red sea bream (see, for example, Seki Nobuo et al., Nippon Suisan Gakkaishi, vol.56, pp.125-132 (1990), and Proceedings of Nippon Fisheries Science Association, Congress in Spring, 1990, page 219), so-called Factor XIII present in blood (WO 93/15234), and, those derived from oyster. Also, those produced by methods of genetic engineering (see, for example, JP-A-1-300889, JP-A-6-225775, JP-A-7-23737 and EP-0693556A) can be mentioned. In accordance with the present invention, any of these TGases can be used, with no specific limitation of the origin and the preparation method. However, in view of the function and the economics in the food applications, the calcium-independent TGases are preferable. For example, the TGases derived from microorganisms (JP-A-64-27471 mentioned above) meet all conditions, and are considered to be the most suitable at present.

In accordance with the invention, the substance suppressing the reaction a substance reversibly inhibiting the reaction of TGase, namely inorganic or organic ammonium salts. Practically, inorganic ammonium salts are simply used, including for example ammonium chloride, ammonium carbonate, ammonium hydrogen carbonate, ammonium aluminium sulfate, ammonium persulfate, ammonium sulfate, diammonium hydrogen phosphate, and ammonium dihydrogen phosphate. Organic ammonium salts include for example ammonium citrate. These can be used singly or in combination of two or more thereof.

The substance suppressing the reaction is selected depending on the kind of the protein and the amount of the enzyme added to the pickle to be prepared, because each substance has its own ability to suppress the reaction in a certain weight amount. Among them, ammonium chloride is the best as the substance suppressing the reaction in accordance with the invention, because it is commonly used as a seasoning and a baking powder in premix and is approved as an enzyme stabilizer, and additionally because it is very inexpensive.

In the use of the substance suppressing the reaction in a pickle, the amount thereof to be added is very significant. The substance is added at an amount enough to inhibit TGase activity to such an extent that the increase of the viscosity of the resulting pickle is sufficiently suppressed but not to substantially reduce the effect of TGase in the final food product because the inhibiting activity is lowered in the raw material meat after the injection due to the lower concentration of the substance therein. The optimum amount of the substance suppressing the reaction varies, depending on the amount of TGase added, the ability to suppress the reaction per weight of the substance, the protein composition in the pickle used, the demanded level of viscosity suppression, and the conditions for the ham production.

In accordance with the invention, an ammonium salt amount above 0.001 mol/liter, preferably 0.002 mol/liter, can generally exert the effect on viscosity suppression in a pickle of a composition with possible viscosity increase due to TGase addition. When the ammonium salt concentration is above 0.2 mol/liter, sufficient effect corresponding to the amount of TGase added is never exerted in the final food product. According to this invention, the ammonium salt concentration is below 0.1 mol/liter.

The amount of TGase to be added to pickle varies, depending on the pickle injection ratio, and the level of the effect and the function expected from TGase. Generally, TGase is used at a concentration within a range of 20 U to 1,000 U/liter in pickle.

The activity of TGase in the present invention and the activity unit thereof can be assayed and defined by the following hydroxamate method. More specifically, the TGase reaction is conducted in a reaction system containing as substrates benzyloxycarbonyl-L-glutamylglycine and hydroxylamine in Tris buffer, at pH 6.0, and a temperature of 37°C; and the hydroxamic acid formed is transformed into an iron complex in the presence of trichloroacetic acid. Then, the absorbance is measured at 525 nm and the hydroxamic acid formed is calculated from a standard curve. Then, the enzyme producing 1 µmol hydroxamic acid per minute is defined as one unit (1 U) of TGase activity (see Japanese Patent Laid-open No. 27471/1989 and USP 5,156,956).

Because the preparation according to the present invention is an enzyme preparation of TGase with an ammonium salt in mixture, the ratio of the ammonium salt and TGase blended in the enzyme preparation is within a range simultaneously satisfying the individual concentrations when added to pickle. More specifically, a case of 20 U/liter of TGase blended with 0.2 mol/liter of an ammonium salt (outside the scope of the invention) in pickle corresponds to a case of 10 moles of ammonium salts per 1,000 U of TGase in the preparation; and a case of 1,000 U/liter of TGase blended with 0.001 mol/liter of an ammonium salt in the pickle corresponds to a case of 0.001 mole of ammonium salts per 1,000 U TGase in the preparation. Thus, the enzyme preparation according to the present invention contains at least these two ingredients, the ammonium salt being blended from 0.001 mole to 10 moles, preferably 0.002 mole to 5 moles, per 1,000 U of TGase. When shown in terms of per weight of TGase, the ammonium salt is blended in amounts from 0.02 mole to 200 moles, preferably 0.04 mole to 100 moles per gram of the pure-enzyme protein.

Any type of protein materials for general use in pickle, namely soy bean protein, caseins, egg white, whey protein, gelatin, collagen and plasma protein, can be used for preparing pickle using the present salting agent, according to conventional methods with no concern of viscosity increase of the pickle.

The salting agent of the present invention is dissolved in cold water in the same way as conventional salting agents, protein materials and sodium chloride generally used, and it is used as a pickle solution. The pickle solution right after the preparation contains foam, which deteriorates the quality of the final product. Therefore, the foam is to be removed by evacuating the pickle or leaving the pickle in cold storage at least overnight. The pickle solution is injected into the raw meat materials using a pickle injector. Afterwards, the meat is tumbled and the pickle is dispersed uniformly in the meat.

The application of the salting agent according to the present invention is not limited to the manufacture of meat products. The salting agent can also be used in the general applications other than meat products in which food raw materials are treated with a solution comprising TGase and protein materials.

### EXAMPLES

The invention is now described in detail in the following examples. The technical scope of the invention is not limited to these examples.

"Activa TG" (1,000 U/g; manufactured by Ajinomoto, Co.) containing as 'the major ingredient TGase derived from genus Streptoverticillium (Streptoverticillium mobaraense IFO 13819) was used as the TGase in the examples.

### Example 1 (Effects of a reaction-suppressing substance on the suppression of viscosity increase of pickle and improvement of firmness in model ham)

A pickle solution of the composition shown in Table 1 was prepared by the following process. Water cooled at 5°C was put into a vessel with a mixer and the protein materials were dissolved and mixed, and then the other raw materials were dissolved. Afterwards, "Activa TG" was added to.the pickle to the following final concentrations: (1) 0 %; (2) 0.005 %; (3) 0.010 %; (4) 0.015 %; and (5) 0.020 % according to Table 2. Alternatively, ammonium chloride was added at the following concentrations, while the amount off "Activa TG" added was fixed at 0.020 %: (6) 0.002 mol/liter; (7) 0.02 mol/liter: and (8) 0.2 mol/liter.

**Table 1**

| Pickle recipe | |
|---|---|
| Raw materials | Blend amount (%) |
| Soy bean protein for ham | 4 |
| Sodium casein | 1.5 |
| Egg white | 2 |
| Whey protein | 1.5 |
| Sodium chloride | 4 |
| Sodium nitrite | 0.03 |
| Polymerized phosphate (salt) | 0.6 |
| Ascorbic acid | 0.2 |
| Dextrin | 7.5 |
| Sugar | 0.7 |
| Glutamate Na | 0.3 |
| Water | 77.67 |
| Total | 100 |

**Table 2**

| Pickle viscosity and model ham | | | | |
|---|---|---|---|---|
| Experimental groups | TGase (U/liter) | NH₄Cl (mol/liter) | Anserine (mol/liter) | Carnosine (mol/liter) |
| (1), comp. | 0 | 0 | - | - |
| (2), comp. | 50 | 0 | - | - |
| (3), comp. | 100 | 0 | - | - |
| (4), comp. | 150 | 0 | - | - |
| (5), comp. | 200 | 0 | - | - |
| (6), inventive | 200 | 0.002 | - | - |
| (7), inventive | 200 | 0.02 | - | - |
| (8), comp. | 200 | 0.2 | - | - |

The pickle samples were left to stand in a low-temperature chamber at 5°C; and the viscosity was measured over time. Meanwhile, 100 parts of each pickle sample one day later were added to 100 parts of minced meat prepared by finely chopping and cutting pork loin through a 5-mm-sieve plate; then, the mixture was mixed together with a Stefan cutter for 3 minutes and filled in a fibrous casing (Ø 90 mm), followed by drying and aging at 60°C in a smoke chamber for 120 minutes, smoking at 60°C for 60 minutes, and steam boiling at 75°C for 120 minutes, to prepare a model ham. The change of the pickle viscosity over time (measured with a viscometer of Type B; No. 2 rotor at 30 rpm) as well as the breaking strength of the resulting model ham (measured with a plunger of Ø 5 mm at 6 cm/min) was measured, while quality assessment was also performed. The results are collectively shown in Table 3.

**Table 3.**

| Pickle viscosity and physical properties and quality assessment of model ham | | | | | | |
|---|---|---|---|---|---|---|
| | Pickle viscosity in cP at 5 °C | | | | Breaking strength of model ham (gram) | Quality assessment of model ham* |
| Experimental groups | Immediately after preparation | one day later | 2 days later | 3 days later | | |
| (1), comp. | 29 | 30 | 32 | 34 | 537 | X |
| (2), comp. | 31 | 35 | 41 | 83 | 599 | X |
| (3), comp. | 30 | 94 | 125 | 444 | 680 | Δ |
| (4), comp. | 32 | 74 | 153 | 808 | 733 | ○ |
| (5), comp. | 27 | 114 | 317 | 3855 | 773 | ○ |
| (6), inv. | 26 | 52 | 110 | 312 | 770 | ○ |
| (7), inv. | 31 | 44 | 66 | 95 | 752 | ○ |
| (8), comp. | 30 | 31 | 36 | 45 | 686 | Δ |

| | | | | | | |
|---|---|---|---|---|---|---|
| *: Effect of the TG on firmness X : insufficient; Δ : slightly insufficient; and ○ : sufficient. | | | | | | |

### Pickle viscosity:

The viscosity scarcely changed in the no TGase group (1); as the amount of "Activa TG" added was increased, the pickle viscosity was more increased (Experimental groups (2) to (5)); and the viscosity in a group with addition of 0.02 % "Activa TG" was above 3,000 cP on day 3, so the pickle absolutely never could be used. On contrast, the increase of the viscosity was significantly suppressed in the ammonium chloride groups (Experimental groups (6) to (8)). Additionally, the viscosity was less increased as the amount of ammonium chloride was increased.

### Breaking strength of model ham

The break strength of model ham was larger as the amount of "Activa TG" was increased, indicating the enhancement of the. firmness and elasticity as food taste and texture. Alternatively, the break strength was slightly decreased in the ammonium chloride groups as the amount of ammonium chloride was increased. Compared with the influence on the pickle viscosity, the decrease was very slight. The same tendency was observed in the anserine and carnosine groups. In other words, it is indicated that TGase activity was inhibited in the pickle samples, but was restored in the resulting ham models.

### Example 2 (Preparation of salting agent for meat products)

One existing enzyme preparation and three enzyme preparations for meat products in accordance with the present invention were prepared according to the recipes A, B, C and D in Table 4. "Activa TG" was used as the TGase; and ammonium chloride commercially available as a food additive was used.

**Table 4.**

| Preparation Table | | | | |
|---|---|---|---|---|
| Preparations | Activa TG* (gram) | NH₄Cl (gram) | Lactose (gram) | Total (gram) |
| A | 10 | 0 | 90 | 100 |
| B | 10 | 5.25 | 84.75 | 100 |
| C | 10 | 52.5 | 37.5 | 100 |
| D | 1 | 52.5 | 45.5 | 100 |

| | | | | |
|---|---|---|---|---|
| *: Activa TG (1g) contains 1,000 U TGase activity/g. | | | | |

To the pickle of the composition shown in Table 1, the preparation shown in Table 4 was added at the following percentages: (1) No addition; (2) Preparation A at 0.2 %; (3) Preparation B at 0.2 %; (4) Preparation C at 0.2 %; and (5) Preparation D at 2.0 %. The TGase concentration was constant in all the experimental groups (2) to (5). The change of the viscosity of the pickle was measured over time. The results are shown in Table 5. In Table 5, compositions with experimental groups 3 and 4 are according to the invention.

**Table 5.**

| Increase of pickle viscosity | | | | | | | | |
|---|---|---|---|---|---|---|---|---|
| | | Amount added to pickle | Concentration in pickle | | Pickle viscosity in cP at 5 °C | | | |
| Experimental groups | Preparations | | TGase in U/liter | NH₄Cl in mol/liter | Immediately after preparation | one day later | 2 days later | 3 days later |
| 1 | - | - | 0 | 0 | 32 | 32 | 33 | 32 |
| 2 | A | 0.2 % | 200 | 0 | 33 | 130 | 358 | 4500 |
| 3 | B | 0.2 % | 200 | 0.002 | 34 | 66 | 131 | 364 |
| 4 | C | 0.2 % | 200 | 0.02 | 30 | 46 | 71 | 102 |
| 5 | D | 2.0% | 200 | 0.2 | 29 | 33 | 38 | 54 |

Roast ham was prepared concurrently by using these pickle samples one day later. The roast ham was prepared from a raw material pork loin in a conventional manner.

The pickle was injected into pork loin using a pickle injector. The pickle injection ratio was 100 % by weight to the raw material meat, and then tumbling was carried out overnight at 5°C. The tumbled meat was filled in a fibrous casing with the folding width of 11 cm and was cooked, Cooking conditions were 60°C and 2 hours for drying, 60°C and 1 hour for smoking and 75°C and 2 hours for steam boiling. The ham was sliced into pieces of 2-mm thickness. The food taste and texture was evaluated by sensory evaluation. The results are shown in Table 6. In Table 6, examples with experimental groups (3) and (4) are according to the invention.

**Table 6**

| Sensory evaluation of roast ham | | |
|---|---|---|
| Experimental groups | | Quality assessment* |
| (1) | Soft with insufficient firmness | X |
| (2) | Good firmness | ○ |
| (3) | Good firmness at the same level as in (2) | ○ |
| (4) | Good firmness at the same level as in (2) | ○ |
| (5) | Slightly softer than (2) but with sufficient firmness | Δ-○ |

| | | |
|---|---|---|
| * Effect of the TG on firmness X : insufficient; Δ : slightly poor; and ○ : sufficient. | | |

### Pickle viscosity:

The viscosity increase in the pickle of group (2) with the addition of the Preparation A with no content of ammonium chloride was very rapid. On contrast, the viscosity increase was remarkably suppressed in the pickle of groups (3), (4) and (5) with the addition of the Preparations B, C and D, respectively, each containing ammonium chloride. Furthermore, , the Preparation C containing more ammonium chloride exerted higher effect on the suppression of the viscosity. Compared with the no addition group (1), the effect of TGase on the physical properties of ham was almost at the same level in the three experimental groups (2), (3) and (4). Compared with the group (2), the group (5) was slightly short of firmness, but the preparation of the group (5) sometimes serves as an effective blend for a case in which no increase of pickle viscosity is allowed.

### Advantages of the Invention

When a salting agent for food processing which contains TGase and a substance suppressing its reaction, i.e. an ammonium salt in an amount above 0.001 mol/liter to below 0.1 mol/liter, is used in pickle, the increase of the viscosity of the pickle can.be markedly suppressed, with almost no influence on the action of TGase to the taste and texture of the resulting final food product.

## Claims

1. A pickle solution, comprising a protein for use in pickle, a transglutaminase, an ammonium salt in an amount above 0.001 mol/liter to below 0.1 mol/liter, and water.

2. A pickle solution according to claim 1, wherein the ammonium salt is selected from the group consisting of ammonium chloride, ammonium carbonate, ammonium hydrogen carbonate, ammonium aluminium sulfate, ammonium iron citrate, ammonium persulfate, ammonium sulfate, diammonium hydrogen phosphate and ammonium dihydrogen phosphate.

3. A pickle solution according to claim 1 or 2, wherein the ammonium salt is ammonium chloride.

4. Use of a pickle solution according to any one of claims 1-3 for meat processing.

5. A processed meat product, obtainable by treating a meat product with a pickle solution as claimed in any of the claims 1 to 3.

## Patentansprüche

1. Pökellösung, umfassend ein Protein zur Verwendung in einem Pökel/einer Pökellösung, eine Transglutaminase, ein Ammoniumsalz in einer Menge über 0,001 Mol/l bis weniger als 0,1 Mol/l und Wasser.

2. Pökellösung nach Anspruch 1, wobei das Ammoniumsalz aus der Gruppe ausgewählt ist, die aus Ammoniumchlorid, Ammoniumcarbonat, Ammoniumhydrogencarbonat, Ammoniumaluminiumsulfat, Ammoniumeisencitrat, Ammoniumpersulfat, Ammoniumsulfat, Diammoniumhyrogenphosphat und Ammoniumdihydrogensulfat besteht.

3. Pökellösung nach Anspruch 1 oder 2, wobei das Ammoniumsalz Ammoniumchlorid ist.

4. Verwendung einer Pökellösung nach einem der Ansprüche 1 bis 3 zur Fleischverarbeitung.

5. Verarbeitetes Fleischprodukt, erhältlich durch Behandeln eines Fleischprodukts mit einer Pökellösung nach einem der Ansprüche 1 bis 3.

## Revendications

1. Solution de saumurage, comprenant une protéine utile dans un saumurage, une transglutaminase, un sel d'ammonium en une quantité supérieure à 0,001 mole/litre et inférieure à 0,1 mole/litre, et de l'eau.

2. Solution de saumurage selon la revendication 1, où le sel d'ammonium est choisi dans le groupe constitué par le chlorure d'ammonium, le carbonate d'ammonium, l'hydrogénocarbonate d'ammonium, le sulfate d'aluminium et d'ammonium, le citrate de fer et d'ammonium, le persulfate d'ammonium, le sulfate d'ammonium, l'hydrogénophosphate de diammonium et le dihydrogénophosphate d'ammonium.

3. Solution de saumurage selon la revendication 1 ou 2, où le sel d'ammonium est le chlorure d'ammonium.

4. Utilisation d'une solution de saumurage selon l'une quelconque des revendications 1 à 3, pour le traitement des viandes.

5. Produit de viande traité, pouvant être obtenu par le traitement d'un produit de viande avec une solution de saumurage selon l'une quelconque des revendications 1 à 3.
